# EUROPEAN PATENT SPECIFICATION

(11) **EP 3 536 576 B1**
(45) Date of publication and mention of the grant of the patent: **13.04.2022**
(21) Application number: 18160709.4
(22) Date of filing: 08.03.2018
(51) Int. Cl.: B60W 50/08, B60W 40/09, B60W 50/00, B60W 50/14

(54) **METHOD AND DEVICE FOR CONTROLLING DYNAMIC BEHAVIOUR OF A VEHICLE, CORRESPONDING COMPUTER PROGRAM PRODUCT AND VEHICLE**
VERFAHREN UND VORRICHTUNG ZUR STEUERUNG DES DYNAMISCHEN VERHALTENS EINES FAHRZEUGS, ENTSPRECHENDES COMPUTERPROGRAMMPRODUKT UND FAHRZEUG
PROCÉDÉ ET DISPOSITIF DE RÉGULATION DE COMPORTEMENT DYNAMIQUE D'UN VÉHICULE, PRODUIT-PROGRAMME D'ORDINATEUR CORRESPONDANT ET VÉHICULE

(43) Date of publication of application: 11.09.2019
(73) Proprietor: FCA Italy S.p.A., 10135 Torino (IT)
(72) Inventor: EPIFANI, Antonio, 20099 Sesto San Giovanni (Milano) (IT); FIGURETTI, Alessio, 60131 Ancona (IT); PINI, Alessandro, 41012 Carpi (Modena) (IT); ROMERI, Stefano, 23010 Albosaggia (Sondrio) (IT); SILVA, Elisabetta, 13881 Cavaglià (Biella) (IT); TABURRI, Massimiliano, 41043 Formigine (Modena) (IT)
(74) Representative: Notaro, Giancarlo

(56) References cited:
- US-A1- 2013 166 121
- US-A1- 2014 350 789

## Description

### Field of the invention

The present invention relates to managing a vehicle behaviour based on a driver's driving style and needs.

### Prior art

Currently, vehicles can be equipped with one or more drive modes, with the object of modifying the dynamic behaviour of the vehicle when there is a request from the driver, for example, by pressing a button that activates one or more of these drive modes.

In particular, the drive modes can comprise:
- a "normal or comfort" mode: the most used mode, that allows good dynamic behaviour of the vehicle in all driving conditions,
- a "sport" mode: that allows more direct vehicle dynamics and a prompter response to commands, and
- a "high efficiency" mode: that saves fuel and allows driving in particular conditions where caution is suggested, such as the presence of a wet or snowy road.

### Technical problem

As mentioned above, the selection of a drive mode is carried out manually, i.e. it is the driver himself who activates one or the other drive mode, based on his needs. However, the manual solution may not be desired by the driver, who must actively interface with a predetermined choice of drive mode.

Furthermore, the number of possible drive modes is increasing, and one or more disadvantages may occur, for example:
- there may be redundant and confusing controls on the dashboard, with a consequent inability to choose the required drive mode and/or most suitable drive mode for the driver's situation and driving style;
- it may be difficult to perceive differences between the numerous drive modes;
- the driver may not take advantage of the possibility of managing the available drive modes, with a consequent poor perception of the system value;
- it is possible to maintain a non-optimal drive mode, without a need or desire thereof, for example, too aggressive and/or very expensive in terms of fuel and/or energy consumption; and/or
- it may be necessary to select the desired drive mode each time the vehicle is started, for example, in case of vehicles equipped with a drive selector operating with unlatched logic.

A method for controlling the dynamic behaviour of a vehicle according to the preamble of claim 1 is known from document US 2013/0166121 A1. Another solution in this field is known from document US 2014/0350789 A1.

### Object of the invention

The object of the present invention is that of providing a method and a device that make it possible to adapt the behaviour of the vehicle to the driving style and to the driver's needs, on the basis of the behaviour of the driver. The present invention therefore has the object of automatically changing the drive mode of the vehicle, without the need for the driver to actively operate on this choice. This allows the dynamic behaviour or the vehicle setup to be changed in the most appropriate manner and in a manner closest to the driver's intentions.

The method according to the invention can adapt the driving of the vehicle continuously, i.e. by modulating control signals of one or more actuators continuously and non-continuously, passing discretely, for example, between the "high efficiency", "normal" and "sport" modes.

Furthermore, an object of the invention can be providing a "robust" method for managing the behaviour of the vehicle, which also allows managing optionally a noise (here to be understood in its typical sense of the theory of the signals, i.e. as "disturbance") generated by the vehicle and/or by the driver. For example, the action of a driver who presses fully on the accelerator could be considered as a desire to switch to a sport drive mode; however, if this occurs after a long period in which the vehicle has maintained a constant cruising speed, it is likely that this action does not correspond to that desire (for example, it could correspond to the need to carry out an overtaking action, and then return to the previous cruising speed) and that, therefore, this action can be considered as a noise signal.

### Summary of the invention

In view of achieving the aforesaid objects, the invention relates to a method for controlling the dynamic behaviour of a vehicle comprising the steps of claim 1.

The invention also relates to a device, a computer program product and a corresponding vehicle.

### Description of the Figures

Further characteristics and advantages of the invention will become apparent from the description that follows with reference to the attached drawings, provided purely by way of non-limiting example, wherein:
- Figures 1 to 3 are block diagrams representative of the logic on which the control of the dynamic behaviour of a vehicle is based, in the case of the present invention, and
- Figures 4A and 4B are representative of a driving map of an acceleration pedal according to one or more embodiments, and
- Figure 5 exemplifies characteristics of the invention.

### Description of an embodiment

The method, subject of the present invention, can refer to an Adaptive Drive Mode, or ADM. When this ADM is active, an automatic adaptation of the behaviour of the vehicle is possible based on the driving style and driver's needs. In particular, the method according to the invention may comprise calculating an ADM index, which can provide a real-time estimate of the driver's behaviour and context, through a plurality of input signals. These input signals comprise one or more of the following:
- signals indicative of actions performed by the driver on the vehicle controls (e.g., position of the accelerator pedal, brake pressure, use of steering, gear shift requests);
- signals indicative of a stress level imposed on the vehicle (e.g., longitudinal and lateral accelerations, more or less decisive torque requirements);

- signals indicative of road conditions (e.g., road gradient, cruising speed);
- activation signals of "Advanced Driver Assistance Systems" - ADAS (for example, cruise control, start and stop, highway assistance, front collision warning, ESP, autonomous drive systems, etc.);
- signals indicative of a vehicle position (e.g., GPS);
- signals received from biometric devices to detect the driver's conditions (at least one of heartbeat, fatigue, body position);
- signals received from environmental status sensors, external to the vehicle (e.g., presence of rain, external temperature); and/or
- signals indicative of a vehicle status (e.g., presence of faults - anomalies).

Thanks to the adaptive drive mode, the processing unit calculates an ADM index, which allows adapting one or more output signals used to control one or more actuators, e.g. vehicle components. For example, the ADM index can be used to adapt one or more of the following:
- engine control (for example, a map of the accelerator pedal);
- gear shift logic (e.g., gearshift maps);
- management of the torque distribution on the vehicle axles;
- behaviour of the vehicle chassis (e.g. with reference to brakes, steering, suspension, movable parts);
- vehicle exhaust (e.g., valves or sound generator);
- infotainment management (for example, cluster, central display, ambient lights, sound);
- management of additional devices that can be linked to the driver's driving style (for example, the position of the seats).

For example, the engine control and the gear shift logic can result in a more responsive and faster vehicle or a vehicle orientated to save fuel.

The method according to the invention can be implemented within a control unit connected to at least one car network (e.g., CAN) and can receive the plurality of input signals previously discussed and/or, in general, input signals that can be used to (consistently) identify the driving style required by the driver.

In general, in one or more embodiments, the ADM can represent a vehicle default mode; however, when required, the driver can manually select the activation of a drive mode among those available.

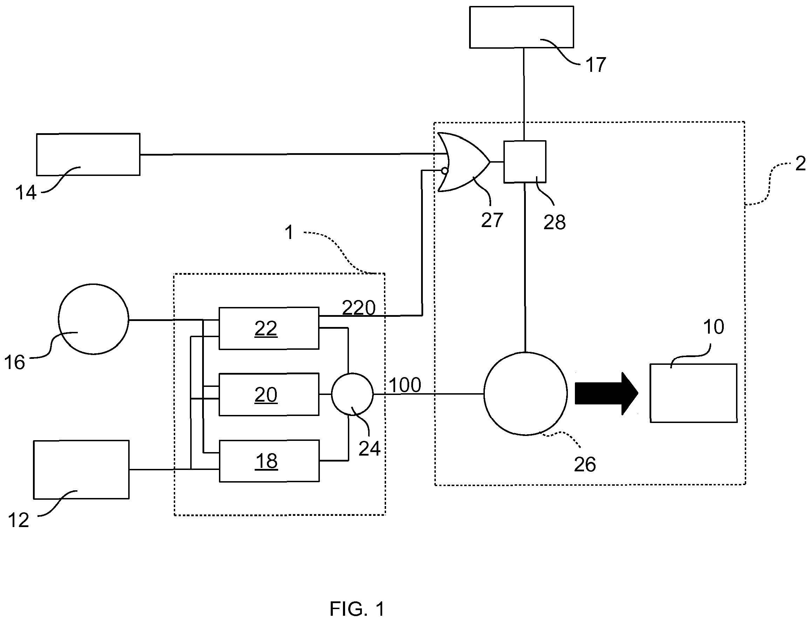

In Figure 1, the calculation of the ADM index, indicated with reference 10 in the Figure, is exemplified. This index 10 varies continuously on a scale and between two ends, indicative of an ecological driving style and of a sport driving style, respectively: for example, the drive index 10 can vary between an ecological lower end, for example, represented by the null value 0, and a sport upper end, for example, represented by the value 100.

In one or more embodiments, the drive modes can be multiple, however, in the present embodiment, three drive modes are exemplified, which can be identified by three sub-ranges of the drive index 10: a first interval 0-X, which can represent an ecological drive mode, an X-Y interval, which can represent a normal drive mode and a Y-100 interval, which can represent a sport drive mode, where the values X and Y are predetermined values, comprised between 0 and 100, with Y greater than X. The transition between one mode and another can occur discretely after a certain calibratable time, however, it is possible in one or more embodiments to provide a continuous modulation of the drive modes, and therefore, it is possible to provide a plurality of hybrid modes and a non-discrete change between one mode and another.

Of course, although the drive index in the present embodiment is represented according to the previously described conventions, it is possible to envisage the case in which the upper end is represented by an ecological driving style, and the lower end is represented by a sport driving style.

The drive index 10 can vary as a function of a plurality of signals, for example:
- one or more input signals 12, indicative of the use of the vehicle by the driver, for example, continuous signals that indicate the vehicle speed, the position of the acceleration pedal, the steering angle, the pressure on the brake pedal, etc.;
- one or more signals of detected events 14, e.g., sporadic, such as signals indicative of a detected anomaly, signal of a "full-throttle" drive of the accelerator pedal (kick-down), signals by one or more ADAS such as, for example, a cruise control mode activation signal;
- one or more standardized signals 16, which indicate the operating conditions of the vehicle: they can be multiplied by one or more input signals 12 (during, for example, processing of levels, integrals and derivatives of the input signals 12).

The normalized signals 16 can be used to better understand the driving context: for example, it is possible to have the accelerator pedal fully pressed (100%), and zero longitudinal acceleration. This does not identify a sporting manoeuvre, but rather a fully loaded situation such as a very challenging climb.

In Figure 1, for the sake of brevity, only one input signal 12, one event signal 14 and one signal of operating conditions 16 are shown; however, the discussion of the embodiment illustrated here can extend to a plurality of signals 12, 14 and 16.

As illustrated in Figure 1, the input signals 12, present on the car network and indicative of the driver's driving style, can be processed by means of at least one processing block, i.e. the input signals 12 can be processed by at least one of the following:
- a derivative block 18, which can derive and normalize the signal 12,
- an integrator block 20, which can integrate and normalize the signal 12, and
- a level block 22, which can normalize an amplitude of the signal 12 and can be configured to set a flag 220, for example, if a variation of the input signal 12 above a certain threshold is detected.

Once processed, the output signals from the derivative 18, integrator 20 and level 22 blocks, if present, can be summed in a first summing block 24, the output of which can represent a contribution 100 of a respective input signal 12 to a sum (with sign) of the drive index. For example, in the present embodiment, the contribution 100 can be added to the drive index, as it may indicate the driver's intention to enter into the sport drive mode, which can be represented by the upper end 100. However, this convention can be modified, and therefore, it is possible to vary the value of the drive index by a value equal to the contribution 100 in the direction of the end represented by the sport mode. Below, the same convention will be used, and therefore:
- subtracting a certain value from the drive index 10 will be interpreted as varying the drive index by this certain value towards the ecological lower end, and
- summing a certain value to the drive index 10 will be interpreted as varying the drive index by this certain value towards the sport upper end.

A second summing block 26 can, therefore, receive the contribution 100 as an input from the output from the first summing block 24 and subtract from it a corrective factor, at the output of a reduction block 28.

In the embodiment represented in Figure 1, the corrective factor can be calculated if one or more detected event signals 14 are present or one or more flags 220 are absent. This evaluation can be performed in an OR logic gate 27, and the output of the OR gate 27 can represent an enabling signal for calculating the corrective factor in the reduction block 28. The reduction block 28 can receive one or more signals 17 at the input, used to calculate a plurality of partial corrective factors, which can be added together and can represent the corrective factor at the output of the reduction block 28. The signals 17 at the input of this block 28 can comprise:
- a signal indicating a recognition of active components that indicate the driver's desire to use a sport mode,
- a signal indicating the number of active components that indicate the driver's desire to use an ecological mode,
- a signal indicative of the activation of ADAS systems,
- one or more signals indicative of one or more anomalies,
- one or more signals indicative of climatic conditions and/or infrastructure conditions,
- one or more signals indicating the position of the vehicle,
- in line with the invention, one or more biometric signals, indicative of the psychophysical state of the driver.

The corrective factor can, therefore, depend on the current drive mode (Eco/Normal/Sport) and on the presence of the signals 17; moreover, the corrective factor can be calibrated according to the type of application and the final result to be achieved.

In particular, the corrective factor can take into account the absence of actions performed by the driver (thanks to the presence of one or more flags 220) and/or the detection of sporadic events (thanks to the signals 14), such as, for example, activation of the ADAS or the presence of an anomaly on the vehicle, which can result in a more or less rapid decrease in the drive index 10 (or rather, a variation towards the ecological end in the present embodiment).

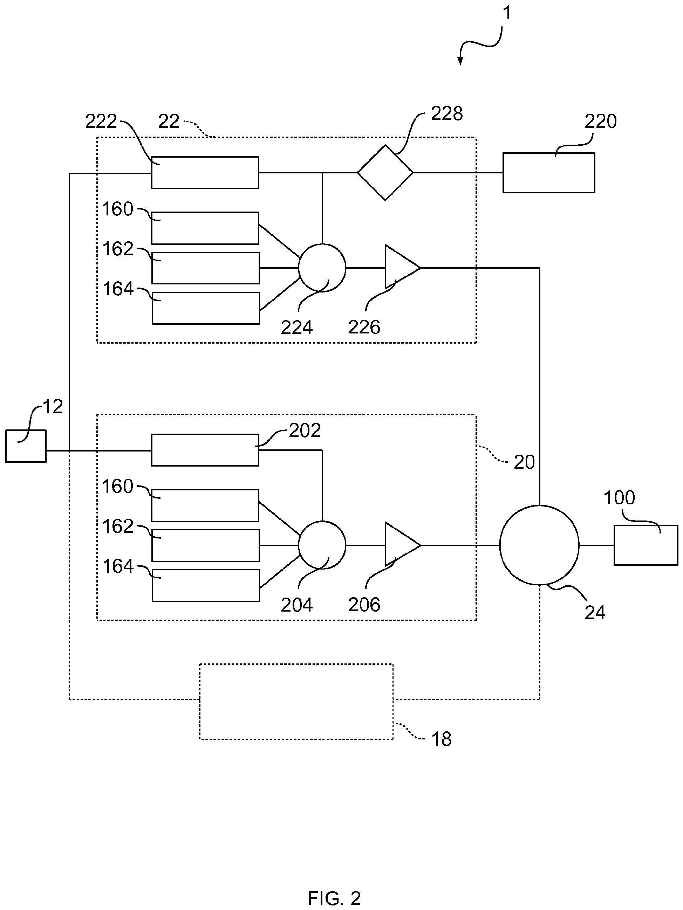

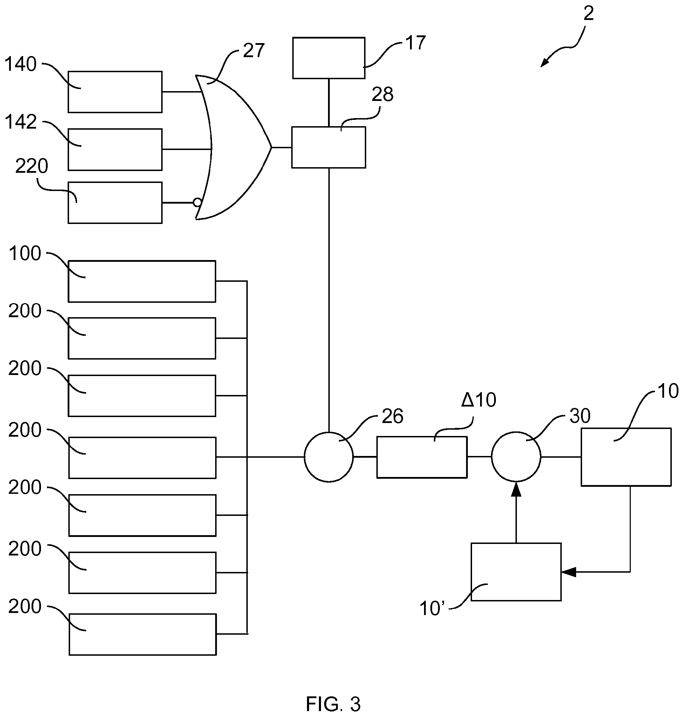

Figure 2 represents a block diagram of a first processing circuit block 1, represented by a dashed line in Figure 1. The first processing circuit block 1 can receive the input signal 12 at its input and can return the contribution 100 and a signal indicative of the flag 220. In general, there may be one or more first processing circuit blocks 1 in one or more embodiments. In Figures 2 and 3, for simplicity and ease of understanding, the same references used in Figure 1 are used to indicate the same components and signals.

In particular, in Figure 2, the calculation of the contribution 100 for the input signal 12 indicative of the position of the accelerator pedal of the vehicle is exemplified.

The signal of the position of the pedal 12 can be normalized in a block 222, and can be multiplied, in a first multiplier block 224, by a plurality of signals indicative of operating conditions 16, for example, a normalized engine speed signal 160, a normalized longitudinal acceleration 162 and a normalized engine torque 164. The output of the first multiplier block 224 can be weighted by a first value, which can be calibrated in a first weighting block 226; finally, the output of the first weighting block 226 can represent a first input of the first summing block 24, and the output of the level block 22.

Similarly, the signal of the position of the pedal 12 can be integrated and normalized in a block 202, and can be multiplied, in a second multiplier block 204, by a plurality of signals indicative of operating conditions 16, for example, the normalized engine speed signal 160, the normalized longitudinal acceleration 162 and the normalized engine torque 164. The output of the second multiplier block 204 can be weighted by a second value, which can be calibrated in a second weighting block 206; finally, the output of the second weighting block 206 can represent a second input of the first summing block 24, and the output of the integrator block 20.

In the case of the accelerator pedal exemplified in Figure 2, the derivative block 18 may not be present in the processing, however, in one or more embodiments, it is possible to implement a derivative block 18 having components analogous to those of the integrator block 20. For example: an input signal at the derivative block 18 can be derived and normalized, and can be multiplied by a plurality of signals indicative of operating conditions 16. Moreover, the multiplied signal can be weighted by a third calibratable value; and the weighted signal may represent a third input of the first summing block 24, as well as the output of the derivative block 18.

In one or more embodiments, it is therefore possible to use, for calculating the drive index 10, the behaviour over time of the input signals 12, and/or an evolution of the signal 12 with respect to past instants. For example, it is possible to evaluate a more or less sporty driving style of the driver as a function of the time during which the pedal remains pressed.

Moreover, the normalized signal 12 can be compared, in a comparison block 228, with a threshold value, for example, the zero value 0. In particular, if the normalized signal 12 has a different value from the zero value, the flag 220 can be set.

The output signals at the first processing circuit block 1 exemplified in Figure 2 can therefore be the following:
- the activation flag 220, if the position of the pedal is different from the zero value, and
- the real time contribution 100 of the signal 12 indicating the position of the accelerator pedal.

In Figure 3, a possible embodiment of a second processing circuit block 2 is exemplified, which can be exemplified by a dotted line in the right-hand portion of Figure 1. The second processing circuit block 2 can receive a plurality of input signals:
- the activation flag 220,
- one or more signals 14, as a signal indicative of the activation of ADAS 140 and a signal indicative of a detected anomaly 142, and
- one or more contributions 100, such as, for example, the contribution 100 of the input signal 12 exemplified in Figure 2, i.e. the position of the accelerator pedal.

Furthermore, additional input signals 200 may be present at the second processing circuit block 2, for example:
- a contribution of a cornering distance, indicative of how aggressive the driver is when turning in a bend, which can be evaluated from the steering angle, which can be calculated as exemplified in Figure 2 as a function of signals 16 of operating conditions such as a lateral acceleration and a yaw angle,
- a contribution of the vehicle speed, which can be a signal included among the signals of operating conditions 16 and then used during the processing of the input signals 12, or a contribution for calculating the drive index 10 in the event of high speed,
- a gear change contribution, indicative of how the driver uses the gearbox, for example, how often he changes gear, or how much stress is imposed on the engine to maintain a particular gear, which can be calculated in an analogous way to that shown in Figure 2, for example, taking into account the engine revolutions at which the gear is changed,
- a kick-down contribution, which indicates whether the driver presses the accelerator pedal at full-throttle, this contribution can be represented as an additional activated flag that can make a contribution to the drive index 10 towards the end of sport drive mode.
- a pressure contribution exerted on the brake pedal, which can be evaluated analogously to the position signal of the accelerator pedal exemplified in Figure 2,
- a contribution requesting activation of a sport mode performed by the driver, which can be represented by an activated flag, which may contribute to the drive index 10 towards the end of sport mode (for example, launch control activation).

The contributions represented by the activation flag 220 and by the one or more signals 140, 142 can be evaluated by the OR logic gate 27 and, if at least one of these signals has a value that indicates, respectively, the absence of set flags, the activation of an ADAS or the presence of an anomaly, the calculation of the corrective factor can be enabled in the reduction block 28: in fact, the output of the OR logic gate 27 can comprise the enabling signal of the reduction block 28. Once again, the reduction block 28 can receive one or more signals 17, as previously described, and produce the corrective factor as a function of the signals.

The remaining contributions, discussed above, can be added algebraically to each other in the second summing block 26. Also in the second summing block 26, the corrective factor can be subtracted from the sum of the contributions.

The output of the summing block 26 can comprise, in one or more embodiments, an increase Δ10 of the drive index 10. This increase Δ10 can be added, in a third summing block 30, to a past value of the drive index 10', which may have been memorized. Finally, an output at the third summing block 30 can represent the current drive index 10.

Therefore, the drive index 10 can be updated in real-time, and can have a continuous value in a range, for example, the range 0-100 in the embodiment exemplified herein.

In one or more embodiments, some events, such as, for example, activation of the ADAS 140, can result in an immediate reduction of the drive index 10; while other contributions may not have an immediate effect on the variation of the drive index 10. For example, a momentary acceleration, due to the change in position of the accelerator pedal, after a period of cruising speed, may not result in an instantaneous increase of the drive index 10 and, therefore, an instantaneous change of the drive mode. Conversely, this variation can occur if high speeds are reached and/or this acceleration is maintained for a relatively long time.

In one or more embodiments, the drive index can be used for:
- indicating the drive mode in which the vehicle is found to the actuators included in the vehicle, including the actuators previously described, and
- varying the control of these actuators on the basis of predefined maps.

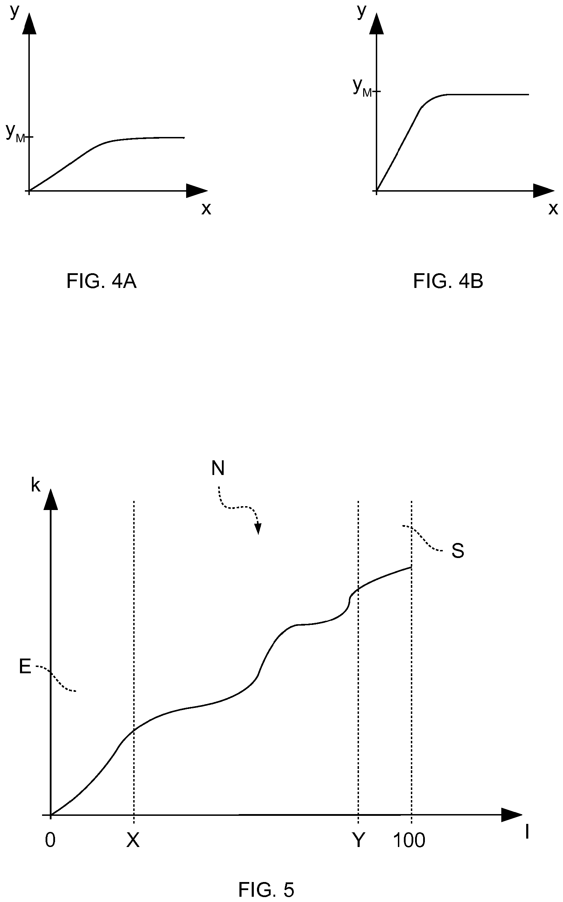

For example, Figures 4A and 4B represent possible pre-defined maps, for an ecological driving style and a sport driving style, respectively. On the X-axes, a percentage indicative of the position of the accelerator pedal is represented, and on the ordinates a requested torque in Nm. As can be seen from Figures 4A and 4B, the represented curve can vary according to the required drive mode:
- by varying an upper limit y_{M}, which can reach the required torque, less in the case of ecological mode, greater in the case of sport mode, and/or
- changing the slope of the curve, i.e. the speed to reach the upper limit from the zero value.

By way of example, in Figure 5, it can be seen how a coefficient k indicative of the slope of the curve can vary according to the drive index 10, or I in the x-axis in Figure 5. Therefore, a plurality of predefined maps can be used for the accelerator pedal, the response of which can be adapted according to the driver's driving style.

In Figure 5, three modes can be observed, which can correspond to the ecological mode E, the normal mode N and the sport mode S. However, even if they are subdivided into three modes, the accelerator pedal maps can be continuously modulated.

In the illustrated example, the accelerator pedal becomes more sensitive by changing the drive mode towards a sport mode. Furthermore, it is possible that other actuators can behave with stepped movements, and, therefore, only activate in a predetermined drive mode: for example, exhaust valves that are only activated upon activation of the sport drive mode. As a further example, other actuators could become more rigid, as in the case of a vehicle steering that can become more rigid in sport drive mode.

In all these cases, these variations take place as a function of the drive index I.

In one or more embodiments, certain environmental and infrastructural parameters can be taken into account when calculating the drive index 10, in order to preserve driver safety. These parameters can affect the drive index, optionally allowing the increase of vehicle performance (for example, activation of a sport mode) only when the environmental and infrastructural conditions allow it: for example, absence of snow on the ground, or availability of a road that is not dangerous and/or not busy. Therefore, these environmental parameters can be used for calculating the corrective factor in the reduction block 28.

Furthermore, biometric signals indicating a driver's psychophysical state can be used in calculating the drive index 10. Also in this case, these biometric signals can be used for calculating the corrective factor in the reduction block 28.

In one or more embodiments, the driver can view the drive mode in which the vehicle is found through communication tools and a series of indicators, for example, cluster, central display, ambient lights, and sound signals.

One or more embodiments as exemplified and described herein may have one or more advantages:
- the elimination of drive modes, or the reduction of drive modes to a single mode or the implementation of a specific drive mode,
- the possibility of implementation on any type of vehicle regardless of the vehicle architecture, for example, electric, hybrid and combustion (BEV, PHEV, ICE),
- the possibility of having a continuous variation of the parameters of the vehicle actuators, such as, for example, powertrain, chassis and gearbox, in order to have an increasingly progressive interaction between vehicle and driver,
- complete user satisfaction during vehicle operation, as the vehicle responds according to the driver's wishes, while at the same time ensuring the most suitable drive mode for the current driving conditions and style,
- an increase in driving comfort and a saving in fuel consumption (and energy in general): the driver does not have to actively deal with changing the drive mode when in traffic and/or at cruising speed on the motorway, the vehicle can instead adapt automatically.

Further advantages of one or more embodiments can be represented by:
- the possibility of defining more than one drive mode, but without the need to enter these modes into a physical drive selector,
- a complete involvement of the driver while driving: the adaptive drive mode can automatically select the drive mode required by the driver on the basis of his own actions;
- increased driving enjoyment, thanks to the numerous amount of information that can be sent to the driver through the communication tools in the vehicle.

Without prejudice to the underlying principles, the details and the embodiments may vary, even appreciably, with respect to what has been described here, purely by way of example, without departing from the field of protection.

The field of protection is defined by the attached claims.

## Claims

1. A method for controlling the dynamic behaviour of a vehicle, the method comprising:
- receiving a plurality of input signals (12), indicative of a behaviour of a plurality of vehicle components operable by a user,
- transmitting a plurality of control signals to a plurality of actuators, configured to modify the dynamic behaviour of the vehicle,
- calculating (1, 2), as a function of said plurality of input signals (12), a drive index (10) continuously variable between two end values, indicative of a sport driving style (S) and an ecological driving style (E), respectively,
- modulating said plurality of control signals as a function of said calculated drive index (10),
the method being **characterized in that** it comprises:
- receiving biometric signals (17) from sensors applied to the user, the biometric signals (17) being indicative of a psychophysical state of the user, wherein the psychophysical state of the user comprises at least one of a heartbeat rate of the user, a fatigue level of the user, and a body position of the user,
- calculating a biometric corrective factor, if said biometric signals (17) reveal a condition that causes an increase in driving danger, and
- varying the drive index (10), towards the end value indicative of an ecological driving style (E), by a value equal to the biometric corrective factor.

2. The method according to claim 1, comprising at least one of the following:
- calculating a set of derivatives (18) of signals in the plurality of input signals (12), and/or
- calculating a set of integrals (20) of signals in the plurality of input signals (12),
whereby the method comprises calculating said drive index (10) as a function of said plurality of input signals (12) and/or of said set of derivatives (18) and/or of said set of integrals (20).

3. The method according to claim 2, comprising:
- calculating differences between current values and previous values of signals in the plurality of input signals (12),
- if said differences exceed respective predetermined thresholds, setting respective flags,
- calculating at least one first corrective factor as a function of said respective flags, and
- varying the drive index, towards the end value indicative of an ecological driving style (E), by a value equal to said at least one first corrective factor.

4. The method according to any of the previous claims, wherein said plurality of input signals (12) comprises a subset of signals, indicative of activation of at least one component of the vehicle by the user,
and wherein calculating said drive index (10) comprises:
- if at least one signal in said subset of signals indicates the absence of activation of at least one component of the vehicle, calculating at least one second corrective factor as a function of the at least one signal in said subset of signals, and
- varying the drive index (10), towards the end value indicative of an ecological driving style (E), by a value equal to the second corrective factor.

5. The method according to any one of the preceding claims, comprising varying the drive index (10), towards the end value indicative of an ecological driving style (E), if the activation of the at least one component indicates that the user activates one or more automatic drive support systems.

6. The method according to any one of the preceding claims, comprising displaying the drive index (10) and/or the current drive mode via communication tools and/or one or more indicators, preferably on a vehicle display.

7. The method according to any one of the preceding claims, comprising:
- calculating a third corrective factor, if at least one anomaly condition is determined (14), and
- varying the drive index (10), towards the end value indicative of an ecological driving style (E), by a value equal to the third corrective factor.

8. The method according to any one of the preceding claims, comprising:
- receiving information on the vehicle's position and/or weather conditions relative to the vehicle's position (17),
- calculating a fourth corrective factor, if said information reveals that the vehicle is in situations wherein caution is advised, and
- varying the drive index (10), towards the end value indicative of an ecological driving style (E), by a value equal to the fourth corrective factor.

9. The method according to any one of the preceding claims, wherein said received signals (16) comprise at least one of the following:
- the vehicle speed,
- longitudinal and/or lateral accelerations of the vehicle,
- a signal indicating an engaged gear,
- a signal indicative of a pressure applied to the acceleration pedal,
- a signal indicative of a pressure applied to the brake,
- a signal indicating a movement of vehicle steering.

10. The method according to any one of the preceding claims, wherein said control signals comprise at least one of the following:
- vehicle engine control signals,
- signals influencing the vehicle gearbox logic,
- signals influencing the management of the torque distribution on the axles of the vehicle,
- signals that influence the behaviour of the chassis,
- signals that influence the behaviour of the exhaust,
- signals that influence the position of the vehicle seats,
- control signals of sound and/or visual components in the vehicle.

11. A computer program product loadable in the memory of at least one processing unit (1, 2) and comprising software code portions for carrying out the steps of the method of any of claims 1 to 10.

12. A device comprising a processing unit for controlling the dynamic behaviour of a vehicle, the processing unit configured to perform the steps of the method of any one of claims 1 to 10.

13. A vehicle, comprising:
- a device according to claim 12,
- a plurality of components that can be activated by a user of the vehicle,
- one or more sensors applicable to the user of the vehicle and configured to provide biometric signals (17) indicative of a psychophysical state of the user, wherein the psychophysical state of the user comprises at least one of a heartbeat rate of the user, a fatigue level of the user, and a body position of the user, and
- a plurality of actuators controllable by said device, configured to modify the dynamic behaviour of the vehicle.

## Patentansprüche

1. Verfahren zur Steuerung des dynamischen Verhaltens eines Fahrzeuges, wobei das Verfahren umfasst:
- Empfangen einer Vielzahl von Inputsignalen (12), welche ein Verhalten von einer Vielzahl von durch einen Benutzer operablen Fahrzeugkomponenten anzeigen,
- Übertragen einer Vielzahl von Steuersignalen zu einer Vielzahl von Aktuatoren, welche ausgebildet sind, das dynamische Verhalten des Fahrzeuges zu modifizieren,
- Berechnen (1, 2) eines kontinuierlich zwischen zwei Endwerten, welche jeweils einen sportlichen Fahrstil (S) und einen ökologischen Fahrstil (E) anzeigen, variierbaren Fahrindexes (10) als eine Funktion der Vielzahl von Inputsignalen (12),
- Modulieren der Vielzahl von Steuersignalen als eine Funktion des berechneten Fahrindexes (10),
wobei das Verfahren **dadurch gekennzeichnet ist, dass** es umfasst:
- Empfangen biometrischer Signale (17) durch auf den Benutzer beaufschlagte Sensoren, wobei die biometrischen Signale (17) einen psychophysischen Zustand des Benutzers anzeigen, wobei der psychophysische Zustand des Benutzers zumindest eines des Folgenden umfasst: eine Herzschlagfrequenz des Benutzers, ein Ermüdungsniveau des Benutzers, und eine Körperposition des Benutzers,
- Berechnen eines biometrischen Korrekturfaktors, falls die biometrischen Signale (17) einen Zustand zeigen, welcher eine Erhöhung der Fahrgefahr erzeugt, und
- Variieren des Fahrindexes (10) durch einen Wert gleich dem biometrischen Korrekturwert zu dem Endwert, welcher einen ökologischen Fahrstil (E) anzeigt.

2. Verfahren nach Anspruch 1, umfassend zumindest eines des Folgenden:
- Berechnen eines Satzes von Ableitungen (18) von Signalen in der Vielzahl von Inputsignalen (12), und/oder
- Berechnen eines Satzes von Integralen (20) von Signalen in der Vielzahl von Inputsignalen (12),
wobei das Verfahren Berechnen des Fahrindexes (10) als eine Funktion der Vielzahl von Inputsignalen (12) und/oder des Satzes von Ableitungen (18) und/oder des Satzes von Integralen (20) umfasst.

3. Verfahren nach Anspruch 2, umfassend:
- Berechnen von Differenzen zwischen aktuellen Werten und vorherigen Werten von Signalen der Vielzahl von Inputsignalen (12),
- falls die Differenzen entsprechende vorbestimmte Schwellenwerte überschreiten, Setzen entsprechender Markierungen,
- Berechnen zumindest eines ersten Korrekturfaktors als eine Funktion der entsprechenden Markierungen, und
- Variieren des Fahrindexes durch einen Wert gleich dem zumindest einen ersten Korrekturfaktor zu dem Endwert, welcher einen ökologischen Fahrstil (E) anzeigt.

4. Verfahren nach einem der vorhergehenden Ansprüche, wobei die Vielzahl von Inputsignalen (12) eine Teilmenge von Signalen umfasst, welche eine Aktivierung zumindest einer Komponente des Fahrzeugs durch den Benutzer anzeigt,
und wobei Berechnen des Fahrindexes (10) das Folgende umfasst:
- falls zumindest ein Signal der Teilmenge von Signalen die Abwesenheit einer Aktivierung zumindest einer Komponente des Fahrzeuges anzeigt, Berechnen zumindest eines zweiten Korrekturfaktors als eine Funktion des zumindest einen Signals der Teilmenge von Signalen, und
- Variieren des Fahrindexes (10) durch einen Wert gleich dem zweiten Korrekturfaktor zu dem Endwert, welcher einen ökologischen Fahrstil (E) anzeigt.

5. Verfahren nach einem der vorhergehenden Ansprüche, umfassend Variieren des Fahrindexes (10) zu dem Endwert, welcher einen ökologischen Fahrstil (E) anzeigt, falls die Aktivierung der zumindest einen Komponente anzeigt, dass der Benutzer ein oder mehrere automatische Fahrunterstützungssysteme aktiviert.

6. Verfahren nach einem der vorhergehenden Ansprüche, umfassend: Anzeigen des Fahrindexes (10) und/oder des aktuellen Fahrzeugmodus über Kommunikationsmittel und/oder weitere Anzeiger, vorzugsweise auf einem Fahrzeugdisplay.

7. Verfahren nach einem der vorhergehenden Ansprüche, umfassend:
- Berechnen eines dritten Korrekturfaktors, falls zumindest eine Anomaliebedingung ermittelt ist (14), und
- Variieren des Fahrindexes (10) durch einen Wert gleich dem dritten Korrekturfaktor zu dem Endwert, welcher einen ökologischen Fahrstil (E) anzeigt.

8. Verfahren nach einem der vorhergehenden Ansprüche, umfassend:
- Empfangen von Informationen über die Fahrzeugposition und/oder Wetterbedingungen relativ zu der Fahrzeugposition (17),
- Berechnen eines vierten Korrekturfaktors, falls die Informationen zeigen, dass das Fahrzeug in Situationen ist, in denen Vorsicht geboten ist, und
- Variieren des Fahrindexes (10) durch einen Wert gleich dem vierten Korrekturfaktor zu dem Endwert, welcher einen ökologischen Fahrstil (E) anzeigt.

9. Verfahren nach einem der vorhergehenden Ansprüche, wobei die empfangenen Signale (16) zumindest eines der Folgenden umfassen:
- die Fahrzeuggeschwindigkeit,
- Längs- und/oder Querbeschleunigungen des Fahrzeuges,
- ein Signal, welches einen eingelegten Gang anzeigt,
- ein Signal, welches einen auf das Beschleunigungspedal ausgeübten Druck anzeigt,
- ein Signal, welches einen auf die Bremse ausgeübten Druck anzeigt,
- ein Signal, welches eine Bewegung des Fahrzeuglenkrades anzeigt.

10. Verfahren nach einem der vorhergehenden Ansprüche, wobei die Kontrollsignale zumindest eines der Folgenden umfassen:
- Fahrzeugmotorsteuerungssignale,
- Signale, welche die Fahrzeuggetriebelogik beeinflussen,
- Signale, welche das Management der Drehmomentverteilung auf den Achsen des Fahrzeuges beeinflussen,
- Signale, welche das Verhalten der Chassis beeinflussen,
- Signale, welche das Verhalten des Auspuffs beeinflussen,
- Signale, welche die Position der Fahrzeugsitze beeinflussen,
- Steuerungssignale von Sound und/oder optischen Komponenten in dem Fahrzeug.

11. Computerprogrammprodukt, welches in einen Speicher zumindest einer Prozessoreinheit (1, 2) ladbar ist und Softwarecodeteile zum Ausführen der Schritte des Verfahrens nach einem der Ansprüche 1 bis 10 umfasst.

12. Vorrichtung, umfassend eine Prozessoreinheit zur Steuerung des dynamischen Verhaltens eines Fahrzeuges, wobei die Prozessoreinheit ausgebildet ist, die Schritte des Verfahrens nach einem der Ansprüche 1 bis 10 durchzuführen.

13. Fahrzeug, umfassend:
- eine Vorrichtung nach Anspruch 12,
- eine Vielzahl von Komponenten, welche durch einen Benutzer des Fahrzeuges aktivierbar sind,
- ein oder mehre Sensoren, welche auf den Benutzer des Fahrzeuges beaufschlagbar sind und ausgebildet sind, biometrische Signale (17) bereitzustellen, welche einen psychophysischen Zustand des Benutzers anzeigen, wobei der psychophysische Zustand des Benutzers zumindest eines des Folgenden umfasst: eine Herzschlagfrequenz des Benutzers, ein Ermüdungsniveau des Benutzers, und eine Körperposition des Benutzers, und
- eine Vielzahl von durch die Vorrichtung steuerbare Aktuatoren, welche ausgebildet sind, das dynamische Verhalten des Fahrzeuges zu modifizieren.

## Revendications

1. Procédé de commande du comportement dynamique d'un véhicule, le procédé comprenant :
- la réception d'une pluralité de signaux d'entrée (12), indicatifs d'un comportement d'une pluralité de composants de véhicule pouvant être actionnés par un utilisateur,
- la transmission d'une pluralité de signaux de commande à une pluralité d'actionneurs, configurés pour modifier le comportement dynamique du véhicule,
- le calcul (1, 2), en fonction de ladite pluralité de signaux d'entrée (12), d'un indice de conduite (10) variable en continu entre deux valeurs extrêmes, indicatives d'un style de conduite sportif (S) et d'un style de conduite écologique (E), respectivement,
- la modulation de ladite pluralité de signaux de commande en fonction dudit indice de conduite (10) calculé,
le procédé étant **caractérisé en ce qu'**il comprend :
- la réception de signaux biométriques (17) de capteurs appliqués à l'utilisateur, les signaux biométriques (17) étant indicatifs d'un état psychophysique de l'utilisateur, dans lequel l'état psychophysique de l'utilisateur comprend au moins l'un d'un rythme cardiaque de l'utilisateur, d'un niveau de fatigue de l'utilisateur et d'une position du corps de l'utilisateur,
- le calcul d'un facteur de correction biométrique, si lesdits signaux biométriques (17) révèlent une condition qui entraîne une augmentation du danger de conduite, et
- la variation de l'indice de conduite (10), vers la valeur extrême indicative d'un style de conduite écologique (E), d'une valeur égale au facteur de correction biométrique.

2. Procédé selon la revendication 1, comprenant au moins l'un de ce qui suit :
- le calcul d'un ensemble de dérivées (18) de signaux dans la pluralité de signaux d'entrée (12), et/ou
- le calcul d'un ensemble d'intégrales (20) de signaux dans la pluralité de signaux d'entrée (12),
moyennant quoi le procédé comprend le calcul dudit indice de conduite (10) en fonction de ladite pluralité de signaux d'entrée (12) et/ou dudit ensemble de dérivées (18) et/ou dudit ensemble d'intégrales (20).

3. Procédé selon la revendication 2, comprenant :
- le calcul de différences entre des valeurs actuelles et des valeurs précédentes des signaux dans la pluralité de signaux d'entrée (12),
- si lesdites différences dépassent des seuils prédéterminés respectifs, la définition de drapeaux respectifs,
- le calcul d'au moins un premier facteur de correction en fonction desdits drapeaux respectifs, et
- la variation de l'indice de conduite, vers la valeur extrême indicative d'un style de conduite écologique (E), d'une valeur égale audit au moins un premier facteur de correction.

4. Procédé selon l'une des revendications précédentes, dans lequel ladite pluralité de signaux d'entrée (12) comprend un sous-ensemble de signaux, indicatifs de l'activation d'au moins un composant du véhicule par l'utilisateur,
et dans lequel le calcul dudit indice de conduite (10) comprend :
- si au moins un signal dans ledit sous-ensemble de signaux indique l'absence d'activation d'au moins un composant du véhicule, le calcul d'au moins un deuxième facteur de correction en fonction de l'au moins un signal dans ledit sous-ensemble de signaux, et
- la variation de l'indice de conduite (10), vers la valeur extrême indicative d'un style de conduite écologique (E), d'une valeur égale au deuxième facteur de correction.

5. Procédé selon l'une quelconque des revendications précédentes, comprenant la variation de l'indice de conduite (10), vers la valeur extrême indicative d'un style de conduite écologique (E), si l'activation de l'au moins un composant indique que l'utilisateur active un ou plusieurs système(s) d'aide à la conduite automatique.

6. Procédé selon l'une quelconque des revendications précédentes, comprenant l'affichage de l'indice de conduite (10) et/ou du mode de conduite actuel par l'intermédiaire d'outils de communication et/ou d'un ou de plusieurs indicateur(s), de préférence sur un dispositif d'affichage du véhicule.

7. Procédé selon l'une quelconque des revendications précédentes, comprenant :
- le calcul d'un troisième facteur de correction, si au moins une condition d'anomalie est déterminée (14), et
- la variation de l'indice de conduite (10), vers la valeur extrême indicative d'un style de conduite écologique (E), d'une valeur égale au troisième facteur de correction.

8. Procédé selon l'une quelconque des revendications précédentes, comprenant :
- la réception d'informations sur la position du véhicule et/ou les conditions météorologiques par rapport à la position du véhicule (17),
- le calcul d'un quatrième facteur de correction, si lesdites informations révèlent que le véhicule se trouve dans des situations dans lesquelles la prudence est recommandée, et
- la variation de l'indice de conduite (10), vers la valeur extrême indicative d'un style de conduite écologique (E), d'une valeur égale au quatrième facteur de correction.

9. Procédé selon l'une quelconque des revendications précédentes, dans lequel lesdits signaux reçus (16) comprennent au moins l'un de ce qui suit :
- la vitesse du véhicule,
- les accélérations longitudinale et/ou latérale du véhicule,
- un signal indiquant un rapport engagé,
- un signal indiquant une pression appliquée sur la pédale d'accélération,
- un signal indiquant une pression appliquée sur le frein,
- un signal indiquant un mouvement de direction du véhicule.

10. Procédé selon l'une quelconque des revendications précédentes, dans lequel lesdits signaux de commande comprennent au moins l'un de ce qui suit :
- des signaux de commande du moteur du véhicule,
- des signaux influençant la logique de boîte de vitesses du véhicule,
- des signaux influençant la gestion de la répartition de couple sur les essieux du véhicule,
- des signaux qui influencent le comportement du châssis,
- des signaux qui influencent le comportement de l'échappement,
- des signaux qui influencent la position des sièges du véhicule,
- des signaux de commande de composants sonores et/ou visuels dans le véhicule.

11. Produit de programme informatique pouvant être chargé dans la mémoire d'au moins une unité de traitement (1, 2) et comprenant des parties de code logiciel pour réaliser les étapes du procédé de l'une des revendications 1 à 10.

12. Dispositif comprenant une unité de traitement pour commander le comportement dynamique d'un véhicule, l'unité de traitement étant configurée pour effectuer les étapes du procédé de l'une quelconque des revendications 1 à 10.

13. Véhicule, comprenant :
- un dispositif selon la revendication 12,
- une pluralité de composants qui peuvent être activés par un utilisateur du véhicule,
- un ou plusieurs capteur(s) pouvant être appliqué(s) à l'utilisateur du véhicule et configuré(s) pour fournir des signaux biométriques (17) indicatifs d'un état psychophysique de l'utilisateur, dans lequel l'état psychophysique de l'utilisateur comprend au moins l'un d'un rythme cardiaque de l'utilisateur, d'un niveau de fatigue de l'utilisateur, et d'une position du corps de l'utilisateur, et
- une pluralité d'actionneurs pouvant être commandés par ledit dispositif, configurés pour modifier le comportement dynamique du véhicule.
